# EUROPEAN PATENT APPLICATION

(11) **EP 3 816 133 A1**
(43) Date of publication of application: **05.05.2021**
(21) Application number: 18926053.2
(22) Date of filing: 14.08.2018
(51) Int. Cl.: C04B 35/119

(54) **METHOD FOR PREPARING ALUMINA-BASED SOLID SOLUTION CERAMIC POWDER BY USING ALUMINUM OXYGEN COMBUSTION SYNTHESIS WATER MIST PROCESS**

(30) Priority: 10.07.2018 CN 201810755347
(71) Applicant: Harbin Jehot Advanced Materials Co.,Ltd., Harbin, Heilongjiang , 150001 (CN)
(72) Inventor: ZHENG, Yongting, Harbin, Heilongjiang 150001 (CN); YU, Yongdong, Harbin, Heilongjiang 150001 (CN); JIANG, Jinsong, Harbin, Heilongjiang 150001 (CN); SU, Xiaoyue, Harbin, Heilongjiang 150001 (CN); LIN, Fengyu, Harbin, Heilongjiang 150001 (CN)
(74) Representative: Tomerius, Isabel
(86) International application number: PCT/CN2018/100463
(87) International publication number: WO 2020/010666

(57) **Abstract**

Disclosed is a method for preparing an alumina-based solid solution ceramic powder by an aluminum-oxygen combustion synthesis and spraying-in-water process, which comprises the following steps: drying raw materials and then mixing uniformly to obtain a mixture; loading the mixture into a high-pressure reactor, igniting in an oxygen-containing atmosphere, carrying out a high-temperature combustion synthesis reaction to form a high-temperature melt and then maintaining the temperature for 1 - 60 s; then turning on a nozzle, spraying out the high-temperature melt through the nozzle and rapidly cooling by a liquid phase, so that the alumina-based solid solution ceramic powder is obtained.

## Description

### Field of Invention

The present invention relates to a method of preparing Al₂O₃-based composite solid solution ceramic powder.

### Description of Related Arts

A lumina ceramic has excellent characteristics such as low price, high hardness, high temperature resistance, oxidation resistance, corrosion resistance, high electrical insulation and low dielectric loss. However, the low toughness and brittle fracture of oxide ceramics severely restrict the further application of alumina ceramics. At present, the most common method for toughening oxide ceramics is to dope a second nano-phase in the ceramic matrix to prepare the nano composite ceramic. Through composite toughening and nano toughening, the toughness of the ceramic can be effectively improved. For example, the ZrO₂ ceramic has excellent phase transition toughening effect, and at the same time Al₂O₃ and ZrO₂ have good chemical and physical compatibility. The preparation of zirconia toughened alumina ceramics (ZrO₂ Toughening Al₂O₃, ZTA) with the use of nanotechnology can combine phase transition toughening and nanoparticle toughening, which greatly improves the mechanical properties of aluminum oxide. On the other hand, the proportion of grain boundaries in the material is high due to the formation of nano-scale materials, so that composite ceramics exhibit special properties and find applications in functional ceramics. However, the existing technology is still unable to prepare large-scale nanocomposite ceramics in the true sense. Therefore, the present invention discloses a novel composite ceramic powder preparation technology, and the composite ceramic powder prepared therewith is then subjected to a high-temperature densification process to prepare alumina-based nanocomposite ceramics. At present, the industrial methods for preparing alumina composite solid solution powder mainly include:

### (1) C o-precipitation method

The co-precipitation method is a method including the steps: adding a precipitation agent to a soluble salt solution containing one or more ions (or hydrolyze the solution at a certain temperature) to form insoluble hydroxides, hydrated oxides or salts, which precipitate from the solution, washing out the anions contained in the solvent and the solution and then obtaining the desired nanoparticles by thermal decomposition or dehydration. The most key technology of the precipitation method is to control the formation of the precipitate, which is implemented by adjusting the concentration of the solution and the precipitation agent, the precipitation rate, the reaction temperature, the value of the solution, and additives and the like. In order to obtain powder with uniform particle size distribution, the nucleation process and the growth process should be separated, and the agglomeration of the particles should be inhibited. The co-precipitation method is relatively simple in preparation process, easy to prepare a sample with high purity and narrow particle size distribution, convenient for large-scale industrial production, has low production cost, and is widely used in industry. However, the co-precipitation method for preparing the oxide solid solution is difficult to achieve uniform precipitation, and the prepared sample may undergo phase separation, which will affect its performance, and the method includes many experimental procedures, resulting in poor repeatability.

### (2) Hydrothermal method

The hydrothermal method generally refers to a method of taking a fluid such as aqueous solution or steam as a medium, placing the reaction solution in a reactor lined with polytetrafluoroethylene, and then setting a certain temperature condition in the reactor so that the solution reacts under a high-temperature and high-pressure condition in the reactor. Since the viscosity and surface tension of water decrease with the increasing temperature, the mobility of molecules and ions in the solution is greatly enhanced under high temperature and high pressure, promoting the diffusion in the aqueous solution in a high effective manner. The hydrothermal method can be divided into two types according to the principle: one is to increase the particle size by hydrothermal method, such as hydrothermal crystallization; the other is to reduce the particle size, such as by hydrothermal oxidation. In the hydrothermal reaction, water can not only participate in the reaction, but also act as a solvent and expansion promoter, as well as a pressure transmission medium. The formation of compounds and the improvement of compound properties are realized by adjusting the physical and chemical factors accelerating the reaction and controlling the hydrothermal process.

The material prepared by the hydrothermal method has high purity, uniform crystal morphology, small crystal grain size, good dispersion, and needs no subsequent processes such as heat treatment. However, the equipment requires high temperature and high pressure resistant steel, and corrosion-resistant lining, the technical difficulty is high, temperature and pressure control requirement is strict, and the cost is high. Also, the equipment is poor in safety, the volume expansion of the fluid in the closed reactor during heating can generate an extremely great pressure and impose a great potential safety hazards. It is still not suitable for bulk production at present.

### (3) Sol-gel method

The sol-gel method refers to the entire process of dissolving a liquid-phase precursor metal alkoxide (or an inorganic salt compound) in a solvent, carrying out a hydrolysis reaction (reaction of non-ionizing molecular precursor and water) and a polycondensation reaction (dehydration condensation or dealcoholysis condensation), then allowing standing still and gelling, and finally performing heat treatment to finally form the solid. Monodispersed oxide particles are grown by dissolving-recrystallization thereof. Since the raw materials used in the sol-gel method are first dispersed into the solvent to form a solution with low viscosity, the uniformity at molecular level can be obtained in a very short time, and when the gel is forming, it is likely that the reactants are uniformly mixed at the molecular level. Meanwhile with a solution reaction step, some trace elements can be uniformly and quantitatively incorporated into the solution, enabling a uniform doping in the molecular level. Compared with the solid phase reaction, the chemical reaction is easier to conduct, and only requires a lower synthesis temperature. However, the raw materials used in the sol-gel method are relatively expensive. Some raw materials are organic compounds, which are harmful to health and easy to pollute the environment. At the same time, the entire sol-gel process takes a long time, usually several days or weeks. In addition, there are a large number of micropores in the gel, and a lot of gas and organic compounds will escape during the drying process and the resulting shrinkage will affect the final performance of the product.

In conclusion, the nano powder prepared by the co-precipitation method has a small initial particle size, a narrow particle size distribution, and the morphology of the powder can be adjusted by controlling the pH value and the temperature of the solution; the shortcoming of the nano powder is that the hybridization of chloride ions introduced due to the process is difficult to completely remove, so that the product performance is influenced. Meanwhile, chemical pollution can be generated in the preparation process; the process requirement is strict and the cost is high; and structural defects of the product can be caused in the calcination process. Although the hydrothermal method can prepare the powder with better performance, and avoid the defects caused by calcination, but sets high requirement on the equipment, and has high manufacturing cost. The sol-gel method has a long production period and is easy to cause pollution during the production process. At the same time, the preparation of high-performance nano-ceramics with the use of nano-powders needs to overcome a series of technical problems: 1) The mainstream production process of nano ceramic powder is a liquid phase method, which has certain chemical pollution; 2) The nano powder has a high surface activity, and is prone to agglomerate, resulting a poor dispersion of powder in the subsequent mixing and molding processes. The existing technological method and process need to be adopted thereto, increasing the manufacturing cost; meanwhile the chemical substances introduced during dispersion produces a certain pollution in the subsequent degreasing process; 3) The nano-powders have an extremely high sintering activity, so that the abnormal growth of nano-crystalline grains needs to be controlled during the sintering process.

### Summary of the Present Invention

### Technical Problems

An object of the present invention is to provide a method for preparing alumina-based solid solution ceramic powder by the aluminum-oxygen combustion synthesis and spraying-in-water process, with which the problems of complex process, high costs, and low output in the prior art are solved .

### Solution to the Technical Problems

### Technical Solution

A method for preparing alumina-based solid solution ceramic powder by the aluminum-oxygen combustion synthesis and spraying-in-water process specifically comprises the following steps:

Drying raw materials and then mixing uniformly to obtain a mixture; loading the mixture into a high-pressure reactor, igniting in an oxygen-containing atmosphere, and carrying out a high-temperature combustion synthesis reaction to form a high-temperature melt, and then maintaining the temperature for Is - 60s; then turning on a nozzle, spraying out the high-temperature melt through the nozzle and rapid cooling by a liquid phase so that the alumina-based solid solution ceramic powder is obtained, the raw materials are aluminum powder and diluent, and the mass fraction of the aluminum powder in the mixture is 10% - 40% , and the mass fraction of the diluent is 60% - 90%.

### Advantageous Effects of the Present Invention

### Advantageous Effects

The advantageous effects of the present invention:
1. The alumina-based solid solution ceramic powder obtained by the method of the present invention has a better microstructure and uniform particles. According to the present invention, the requirement on the particle size of the raw materials is not high, so powder in the micron-scale can be used which greatly reduced the cost.
2. The alumina-based solid solution ceramic powder obtained by the method of the present invention has a diameter of 0.5µm - 30µm. The composite solid solution powder can undergo solid solution precipitation by a high-temperature densification process to form a nano-phase, so that a uniform and fine nano-precipitation structure is obtained. At present, aluminum oxide-based nanocomposite ceramic can be obtained by hot-pressing and sintering with this method, which has a strength up to 1000 MPa and a toughness up to 12 MPa·m^{1/2} when the zirconium oxide content is low (20wt% - 40wt%) which has a strength up to 1100 MPa and a toughness up to 13 MPa·m^{1/2} when the zirconium oxide content is moderate (40wt% - 60wt%); and which has a strength up to 1200 MPa and a toughness up to 15 MPa·m^{1/2} when the zirconium oxide content is high (60wt% - 80wt%).
3. The present invention provides a fast technological process with extremely high efficiency. The duration for maintaining the temperature is 1 - 60 seconds. 1 kg - 30 kg of the powder can be sprayed each time, and the production rate of the powder is high.

### Brief Description of the Drawings

### Description of the Drawings

FIG. 1 is a schematic structural diagram of the high-pressure reactor used in the method of the present invention;
FIG. 2 is a schematic structural diagram of a nozzle holder in the high-pressure reactor;
FIG. 3 is the morphology of alumina-based solid solution ceramic powder prepared in Example 1;
FIG. 4 is the cross-section texture morphology of the aluminum oxide-based solid solution ceramic obtained in Example 1.

### Embodiments of the Present Invention

### Detailed Description of the Preferred Embodiment of the Present Invention

Embodiment 1: According to this embodiment, a method for preparing alumina-based solid solution ceramic powder by an aluminum-oxygen combustion synthesis and spraying-in-water process is specifically carried out according to the following steps:

Drying raw materials and then mixing uniformly to obtain a mixture; loading the mixture into a high-pressure reactor, igniting in an oxygen-containing atmosphere, carrying out high-temperature combustion synthesis reaction to form a high-temperature melt, and then maintaining the temperature for Is - 60s; then turning on a nozzle, spraying out the high-temperature melt through the nozzle and rapid cooling by a liquid phase so that the alumina-based solid solution ceramic powder is obtained; the raw materials are aluminum powder and diluent, and the mass fraction of the aluminum powder in the mixture is 10% - 40% , and the mass fraction of the diluent is 60% - 90%.

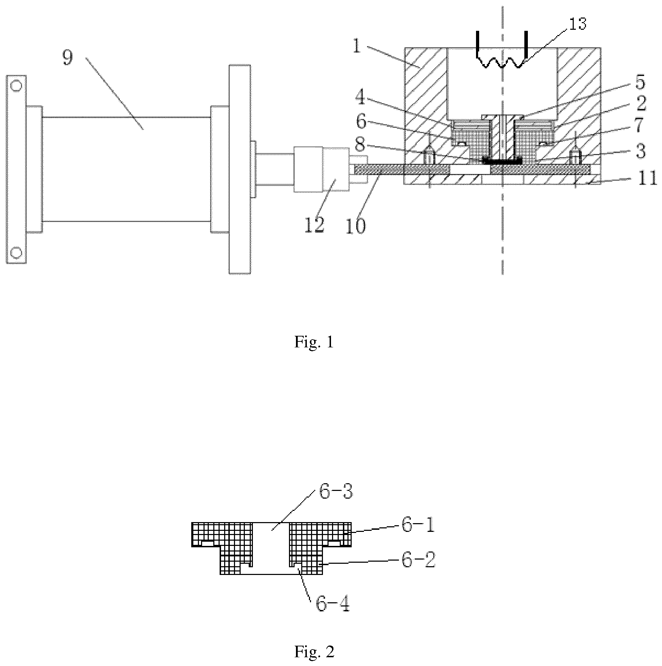

This embodiment is described with reference to FIG. 1 and FIG. 2. The high-pressure reactor comprises a reactor 1, a pressing plate 4, a nozzle 5, a nozzle holder 6, a pre-tightening sealing member 8, an upper sliding plate 10, a lower sliding plate 11, a resistance wire 13 and a drag device 9. There are two stepped circular holes along the thickness direction of the bottom of the reactor 1, the first stepped circular hole 2 is located on the upper part of the second stepped circular hole 3 and has a larger diameter than that of the second stepped circular hole 3.

The nozzle holder 6 comprises a coaxial integral structure formed by a circular plate-shaped frame body portion 6-1 and a cylindrical portion 6-2, an insertion hole 6-3 opened along a central axis of the nozzle holder 6, an annular groove 6-4 opened on an end surface of the cylindrical portion 6-2. The nozzle holder 6 is inserted into the two stepped circular holes, with the cylindrical portion 6-2 being matched to the second stepped circular hole 3, and the circular plate-shaped frame body portion 6-1 being matched with the first stepped circular hole 2. The lower surface of the circular plate-shaped frame body portion 6-1 overlaps the step surface of the two stepped circular holes, and the pre-tightening sealing member 8 is embedded into the circular ring groove 6-4.

The pressing plate 4 is arranged on the upper surface of the circular plate-shaped frame body portion 6-1, is in threaded connection with the first stepped circular hole 2, and has a pressing plate through hole formed in the center of the pressing plate 4.

The nozzle 5 is provided in the pressing plate through hole of the pressing plate 4 and also in the insertion hole 14 of the nozzle holder 6. A graphite core is arranged in the nozzle 5. The bottom surface of the nozzle 5 abuts against the upper surface of the pre-tightening sealing member 8. The upper plate surface of the upper sliding plate 10 is in contact with the outer surface of the bottom of the reactor 1, and the lower sliding plate 11 is arranged below the upper sliding plate 10 in contact with each other. The upper sliding plate 10 and the lower sliding plate 11 are provided with sliding plate through holes respectively. The diameter of the sliding plate through holes ensures the passage of the pre-tightening sealing member 8. The sliding plate through hole in the lower sliding plate 11 faces the pre-tightening sealing member 8. The upper sliding plate 10 is driven by the drag device 9 to move horizontally. The nozzle 5 has a nozzle size of Φ1-20mm.

According to this embodiment, an aluminum oxygen combustion synthesis and spraying-in-water process is adopted. The method does not require an external heat source, and uses active metal aluminum and oxygen as reactants to conduct an aluminum-oxygen combustion synthesis reaction to synthesize inorganic refractory materials. In this embodiment, the ignited mixture in the high-pressure reactor undergoes an exothermic reaction, resulting in high temperature and high pressure conditions, so that the mixture is heated above the melting point to form a high-temperature melt. The high-temperature melt under high-temperature and high-pressure conditions is sprayed into a liquid cooling medium, atomized and rapidly cooled to form a composite oxide solid solution powder. According to this embodiment the ratio of the aluminum powder is designed to control the theoretical adiabatic temperature and reaction pressure of the combustion synthesis reaction to the diluent in the mixture. At different reaction temperatures, reaction pressures and different atomization solutions (such as water, various salt solutions of water, etc.), different cooling rates can be obtained. The composite solid solution powder can undergo solid solution precipitation by a high-temperature densification process to form nano-phases. The nano-phases are dispersed and evenly distributed in the matrix to obtain a high-density, dense and uniform nano-precipitation structure, thereby giving high-strength and tough nano-composite oxide ceramics. This method for preparing nano-composite oxide ceramics through solid phase transition in situ solves the problems of uneven distribution of nanoparticles in the matrix, easy agglomeration and grain growth in traditional processes. The process of this method is simple, the reaction is rapid, the preparation period is short, and the output is large. It is a new low-cost, green and environmentally friendly, high-efficiency process method for preparing nano composite oxide ceramics.

The principle of this embodiment: According to the method of this embodiment, the active metal aluminum is used as the reducing agent, and oxygen is used as the oxidizing agent to conduct an exothermic reaction and provide a heat source. Oxygen with a specific pressure is introduced to regulate the reaction temperature and the reaction pressure, and meanwhile oxygen-containing mixed gas (such as O₂, N₂ and air) can be introduced to regulate the reaction pressure and the reaction product. One or more diluents (which do not react with the reactant, and is mainly oxides) is added to control the reaction temperature and the composition of the product, thereby oxide composite solid solution ceramic powders of different systems are obtained. The method of this embodiment has the advantages of low costs, suitability for bulk production, and meanwhile, due to the fact that the solid solution powder is obtained by rapidly cooling in a high-temperature environment, a large amount of vacancies exists in the solid solution, which is very beneficial for the subsequent sintering process.

According to this embodiment, the temperature generated in the combustion synthesis process can reach 2100 - 4000°C. When the mass fraction of the aluminum powder in the mixture is 10%, the oxygen content is 5 MPa, i.e., the lowest mass ratio of the reactant (aluminum powder) to the raw materials, the adiabatic temperature of combustion synthesis of the system is the lowest, which is 2100°C; when the mass fraction of the aluminum powder in the mixture is 40%, i.e, the highest mass ratio of the reactant (aluminum powder) to the raw materials, the adiabatic temperature of combustion synthesis of the system is the highest, which is 4000°C.

According to the embodiment, the reaction pressure in the combustion synthesis process is mainly adjusted by three ways: 1. the gas pressure in the reaction vessel after the reaction is adjusted by changing the raw material proportion and the atmosphere pressure; 2. the pressure is adjusted through the temperature generated by the reaction; 3. after the reaction, the pressure of the system is reduced to a specified pressure by decompression. Finally, the pressure in the system is controlled at a range of 0.5MPa - 50MPa, that is, the high temperature melt is sprayed out from the nozzle under the air pressure of 0.5MPa - 50MPa.

When the composite oxide melt is sprayed from the nozzle at high speed under high temperature and high pressure, it is sprayed into a liquid cooling medium (water, salt solution, etc.) to be atomized and rapidly cooled to form a composite solid solution powder. When the composite oxide melt is in a low-temperature and high-pressure state when it is sprayed, amorphous body will form on the surface of the solid solution powder due to the extremely cooling rate of the solution on the droplets surfaces. In the equilibrium state, the solid solubility of the oxide is very small, generally less than 10wt%, and the solid solution powder prepared by this embodiment greatly improves the solid solubility. For example, in the prepared solid solution powder of Al₂O₃/ZrO₂ system, the content of ZrO₂ ranges from 0wt% to 85wt%. At the same time, this embodiment is a fast process with extremely high efficiency. The duration to form a high-temperature melt during the high-temperature combustion synthesis reaction is only a few seconds to a few minutes, the duration for maintaining the temperature is 1-60 seconds. 1-30 kg of powder can be sprayed each time, and the production rate of the powder is very high.

When the alumina-based solid solution ceramic powder is Al₂O₃/ZrO₂ system solid solution ceramic powder, the ZrO₂ content in the Al₂O₃/ZrO₂ system solid solution ceramic powder can be 0 - 85wt%. When the raw material powder is Al powder and the diluent is all aluminum oxide, the ZrO₂ content in the prepared Al₂O₃/ZrO₂ system solid solution ceramic powder is 0wt%. When the raw material powder is Al powder and the diluent is all zirconium oxide, and the adiabatic temperature is set at 2100°C (such that the required reaction heat is minimized, the amount of Al powder is reduced and the generated Al₂O₃ is reduced), the ZrO₂ content in the prepared Al₂O₃/ZrO₂ system solid solution ceramic powder can reach as high as 85wt%. In addition, the ZrO₂ content in the prepared Al₂O₃/ZrO₂ system solid solution ceramic powder can be further increased by preheating. In addition to preparing Al₂O₃/ZrO₂ system solid solution ceramic powder, various Al₂O₃-based composite solid solution powders (such as Al₂O₃/MgO, Al₂O₃/TiO₂, Al₂O₃/SrO and the like) can also be prepared. The preparation method is similar to the above, but the initial raw materials added are different.

When zirconium oxide is contained in the aluminum oxide-based solid solution ceramic powder, yttrium oxide, cerium oxide, magnesium oxide, calcium oxide, titanium oxide or scandium oxide is added to act as a phase transition stabilizer. For example, yttrium oxide is added as a phase transition stabilizer, so that Al₂O₃/ZrO₂(Y₂O₃) solid solution powder can be prepared.

When only O₂ gas is introduced, the reaction formula of aluminum-oxygen combustion synthesis is:

4Al+3O₂→2Al₂O₃

In the process of aluminum-oxygen combustion synthesis reaction, the reaction temperature is extremely high, which can reach 2000 - 5000°C. Adding one or more diluents can not only improve the stability of aluminum-oxygen combustion synthesis, but also help control the proportion of final products, so as to obtain solid solution powder in different proportions.

When O₂/N₂ mixed gas or air is introduced, the reaction formulae of aluminum-oxygen combustion synthesis are (by taking the final product of Al₂O₃/ZrO₂ as an example):

4Al+3O₂→2Al₂O₃

8Al+3N₂+6ZrO₂→4Al₂O₃+6ZrN

When O₂/N₂ mixed gas or air is introduced, Al preferentially reacts with oxygen. The ZrN phase produced in the powder product as a hard phase improves the mechanical property and the electronic conductivity of the material.

In order to reduce Al₂O₃ generated by reaction and regulate the ratio of Al₂O₃/ZrO₂ in the final product, the raw materials can be preheated (the preheating temperature is 25-300°C). With the same predetermined temperature, preheating the raw materials can reduce the required heat of reaction. From the reaction formulae, it can be seen that the reaction can generate Al₂O₃, preheating can improve the content of ZrO₂, and produce a composite solid solution powder with high ZrO₂ content.

Embodiment 2: this embodiment differs from the embodiment 1 in that: the diluent is one or more selected from the group consisting of: aluminum oxide, zirconium oxide, magnesium oxide, calcium oxide, strontium oxide, scandium oxide, iron oxide, molybdenum oxide, barium oxide, vanadium oxide, titanium oxide, chromium oxide, cobalt oxide, nickel oxide, yttrium oxide, niobium oxide, hafnium oxide, tantalum oxide, lanthanum oxide, cerium oxide, praseodymium oxide, neodymium oxide, samarium oxide, europium oxide, gadolinium oxide, terbium oxide, dysprosium oxide, holmium oxide, erbium oxide, thulium oxide, ytterbium oxide, silicon oxide and lutetium oxide. Others are the same as the embodiment 1.

When the alumina-based solid solution ceramic powder is Al₂O₃/ZrO₂ system solid solution ceramic powder, the ZrO₂ content in the Al₂O₃/ZrO₂ system solid solution ceramic powder can be 0 - 85wt%. When the raw material powder is Al powder and the diluent is all aluminum oxide, the ZrO₂ content in the prepared Al₂O₃/ZrO₂ system solid solution ceramic powder is 0wt%. When the raw material powder is Al powder and the diluent is all zirconium oxide, and the adiabatic temperature is set at 2100°C (such that the required reaction heat is minimized, the amount of Al powder is reduced and the generated Al₂O₃ is reduced), the ZrO₂ content in the prepared Al₂O₃/ZrO₂ system solid solution ceramic powder can be as high as 85wt%. In addition, the ZrO₂ content in the prepared Al₂O₃/ZrO₂ system solid solution ceramic powder can be further increased by preheating.

According to this embodiment, in addition to preparing Al₂O₃/ZrO₂ system solid solution ceramic powder, various Al₂O₃-based composite solid solution powders (such as Al₂O₃/MgO, Al₂O₃/TiO₂, Al₂O₃/SrO and the like) can also be prepared. The preparation method is similar to the above, but the initial raw materials added are different.

Embodiment 3: this embodiment differs from the embodiment 2 in that: when the alumina-based solid solution ceramic powder contains zirconium oxide, the molar ratio of yttrium oxide to zirconium oxide is (0 - 20): 100; the molar ratio of cerium oxide to zirconium oxide is (0 - 30): 100; the molar ratio of magnesium oxide to zirconium oxide is (0 - 28): 100; the molar ratio of calcium oxide to zirconium oxide is (0 - 33.45): 100; the molar ratio of titanium oxide to zirconium oxide is (0 - 44.41): 100; the molar ratio of scandium oxide to zirconium oxide is (0 - 20): 100. Others are the same as the embodiment 2.

In this embodiment, yttrium oxide, cerium oxide, magnesium oxide, calcium oxide, titanium oxide or scandium oxide is added to act as a phase transition stabilizer, and corresponding phase transition stabilizers are added to prepare composite oxide solid solution powders of different systems. For example, yttrium oxide can be added to the Al₂O₃/ZrO₂ system as a phase transition stabilizer to prepare Al₂O₃/ZrO₂(Y₂O₃) solid solution powder.

Embodiment 4: this embodiment differs from one of the embodiments 1 - 3 in that: the oxygen-containing atmosphere is oxygen, a mixture of oxygen and air, or a mixture of oxygen and nitrogen.

When the oxygen-containing atmosphere is oxygen, the pressure of oxygen is 5MPa - 50MPa;
when the oxygen-containing atmosphere is a mixture of oxygen and air, the pressure of oxygen in the oxygen-containing atmosphere is 5MPa - 50MPa, and the pressure of air is 0MPa - 20MPa;
when the oxygen-containing atmosphere is a mixture of oxygen and nitrogen, the pressure of oxygen in the oxygen-containing atmosphere is 5MPa - 50MPa, and the pressure of nitrogen is 0MPa - 20MPa.

Others are the same as the embodiments 1-3.

When only O₂ gas is introduced, the reaction formula of aluminum-oxygen combustion synthesis is:

4Al+3O₂→2Al₂O₃

In the process of aluminum-oxygen combustion synthesis reaction, the reaction temperature is extremely high, which can reach 2000 - 5000°C. Adding one or more diluents can not only improve the stability of aluminum-oxygen combustion synthesis, but also help control the proportion of final products, so as to obtain solid solution powder in different proportions.

When O₂/N₂ mixed gas is introduced, the reaction formulae of aluminum-oxygen combustion synthesis are (by taking the final product of Al₂O₃/ZrO₂ as an example):

4Al+3O₂→2Al₂O₃

8Al+3N₂+6ZrO₂→4Al₂O₃+6ZrN

When O₂/N₂ mixed gas is introduced, Al preferentially reacts with oxygen. The ZrN phase produced in the powder product as a hard phase improves the mechanical property and the electronic conductivity of the material.

Embodiment 5: this embodiment differs from the embodiment 4 in that: when the oxygen-containing atmosphere is a mixture of oxygen and air, the pressure of oxygen in the oxygen-containing atmosphere is 5MPa - 50MPa, and the pressure of air is 0.1MPa - 20MPa;
when the oxygen-containing atmosphere is a mixture of oxygen and nitrogen, the pressure of oxygen in the oxygen-containing atmosphere is 5MPa - 50MPa, and the pressure of nitrogen is 0.1MPa- 20MPa.

Others are the same as the embodiment 4.

Embodiment 6: this embodiment differs from the embodiments 1-5 in that: The mixture is loaded into a high-pressure reactor, and the mixture is preheated to 25-300°C, and then ignited in an oxygen-containing atmosphere for carrying out high-temperature combustion synthesis reaction. Others are the same as the embodiments 1-5.

The raw materials can be preheated (the preheating temperature is 25-300°C). With the same predetermined temperature, preheating the raw materials can reduce the required heat of reaction. From the reaction formulae, it can be seen that the reaction can generate Al₂O₃, preheating can reduce the generation of Al₂O₃ in the reaction and finally control the ratio of Al₂O₃/ZrO₂ in the final product. Preheating can improve the content of ZrO₂, and produce a composite solid solution powder with high ZrO₂ content.

Embodiment 7: this embodiment differs from the embodiments 1-6 in that: a method for preparing alumina-based solid solution ceramic powder by an aluminum-oxygen combustion synthesis and spraying-in-water process is specifically carried out according to the following steps:
1. Drying: drying the aluminum powder and diluent. The aluminum powder is dried in vacuum, inert gas or reducing gas. The aluminum oxide diluent is dried directly. The drying temperature is 60 - 120°C, and the drying duration is 8 - 6h; the vacuum degree of vacuum drying is 0.05 - 0.09MPa.
2. Mixing: mixing the dried aluminum powder with the dried diluent obtained in step 1, and ball-milling with a planetary ball mill. The mass ratio of the balls to materials is 3:1, and the milling duration is 2-8h. After the ball milling, the materials are sieved by a 40 - 200 mesh sieve to obtain the mixture. The mass fraction of aluminum powder in the mixture is 10% - 40%, and the mass fraction of diluent is 60% - 90%.
3. Loading the mixture into a high-pressure reactor, introducing O₂ or O₂ mixed gas into the high-pressure reactor, and setting the pressure at 5 - 50MPa. The nozzle is arranged at the lower end of the high-pressure reactor. The nozzle size of the nozzle is Φ1 - 20mm. The high-pressure reactor is installed in a circulating water-cooling device. The mixture is ignited by the resistance wire and carries out the high-temperature combustion synthesis reaction. During the reaction, the temperature is set to 2100 - 4000°C. After the formation of the high-temperature melt, the temperature is maintained for Is - 60s. Then the nozzle is turned on, and the high-temperature melt is sprayed out through the nozzle under high temperature and high pressure, and is rapidly cooled by liquid phase to obtain alumina-based solid solution ceramic powder.

The content of the present invention is not limited to the contents of the foregoing embodiments, and a combination of one or several specific embodiments can also achieve the purpose of the invention.

Example 1: A method for preparing alumina-based Al₂O₃/ZrO₂ solid solution ceramic powder by an aluminum-oxygen combustion synthesis and spraying-in-water process was specifically carried out by the following steps:
1. Drying: the aluminum powder, alumina powder and zirconia powder were dried. The aluminum powder was vacuum dried at a vacuum of 0.06MPa and at a drying temperature of 80°C for 12 hours; the alumina powder and zirconia powder were directly dried at a drying temperature of 80°C for 12 hours.
2. Mixing: 131.72 g of dried aluminum powder, 398.49 g of dried alumina powder and 469.78 g of dried zirconia powder were mixed and ball-milled with a planetary ball mill. The mass ratio of balls to materials was 3:1, and the ball milling time was 4h. After ball milling, the materials were sieved by a sieve of 40 - 200 mesh to obtain the mixture.
3. the mixture was loaded into a high-pressure reactor, O₂ was introduced with the oxygen pressure being set at 13 MPa. The nozzle was arranged at the lower end of the high-pressure reactor. The nozzle size of the nozzle was Φ 8 mm. The high-pressure reactor was installed on a circulating water-cooling device. The mixture was ignited by the resistance wire and carried out the high-temperature combustion synthesis reaction. After the formation of the high-temperature melt, the temperature was maintained for 10 s. Then the nozzle was turned on, and the high-temperature melt was sprayed out through the nozzle under high-temperature and high-pressure and sprayed into the water-cooling device for rapid cooling by liquid phase to obtain alumina-based solid solution ceramic powder. The cooling liquid for rapid cooling by liquid phase was water.

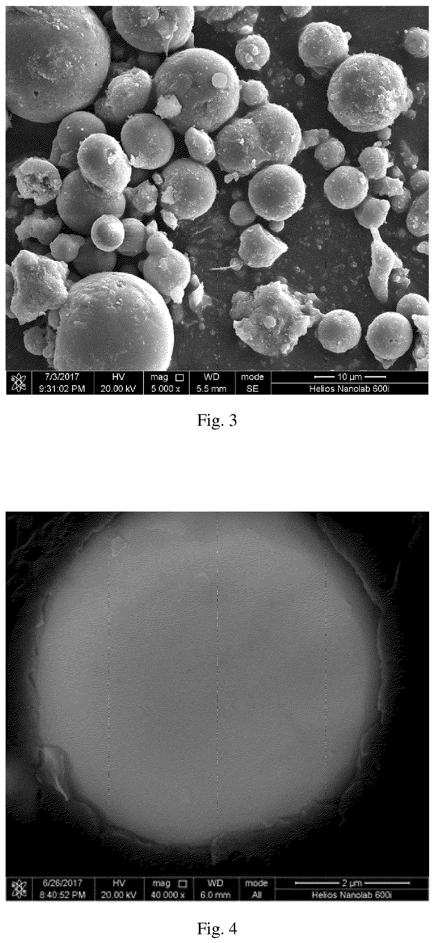

The alumina-based solid solution ceramic powder and oxide composite solid solution ceramic obtained in Example 1 was subjected to a BSE analysis, with results being shown in FIG. 3. FIG. 3 illustrates the morphology of the alumina-based solid solution ceramic powder prepared in Example 1. It can be seen from FIG. 3 that the spherical powder is almost uniformly milky white (black is the solid glue that binds the powder particles). The solid solution powder was obtained due to high cooling rate. These results further indicate that the oxide composite melt formed by the aluminum-oxygen combustion synthesis can be cooled by liquid phase to prepare high-purity spherical micron-scale oxide composite solid solution powder. Also, it has low costs, and is green and environmentally friendly, and suitable for large-scale industrial production.

The alumina-based solid solution ceramic powder was densified by hot pressing sintering to obtain alumina-based solid solution ceramics. The cross-sectional structure of the alumina-based solid solution ceramic was shown in FIG. 4, which is the cross-sectional texture morphology of the alumina-based solid solution ceramic obtained in Example 1. The oxide composite solid solution ceramic was subjected to a three-point bending test, with the performances: fracture toughness is 8.45 MPa·m^{1/2} and bending strength is 680 MPa.

Example 2: A method for preparing alumina-based Al₂O₃/ZrO₂ composite solid solution ceramic powder by an aluminum-oxygen combustion synthesis and spraying-in-water process was specifically carried out by the following steps:
1. Drying: the aluminum powder, alumina powder and zirconia powder were dried. The aluminum powder was vacuum dried at a vacuum of 0.06MPa and at a drying temperature of 80°C for 10h; the alumina powder and zirconia powder were directly dried at a drying temperature of 80°C for 10h.
2. Mixing: 207.8 g of dried aluminum powder, 554.9 g of dried alumina powder and 237.31 g of dried zirconia powder were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture was loaded into a high-pressure reactor, O₂ was introduced with the oxygen pressure being set at 22 MPa. The nozzle was arranged at the lower end of the high-pressure reactor. The nozzle size of the nozzle was Φ2mm. The high-pressure reactor was installed on a circulating water-cooling device. The mixture was ignited by the resistance wire and carried out the high-temperature combustion synthesis reaction. After the formation of the high-temperature melt, the temperature was maintained for 40s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

Example 3: A method for preparing alumina-based Al₂O₃/ZrO₂(CeO₂) composite solid solution ceramic powder by an aluminum-oxygen combustion synthesis and spraying-in-water process was specifically carried out by the following steps:
1. Drying: the aluminum powder, alumina powder and zirconia powder were dried. The aluminum powder was vacuum dried at a vacuum of 0.06MPa and at a drying temperature of 80°C for 10h; the alumina powder and zirconia powder were directly dried at a drying temperature of 80°C for 10h.
2. Mixing: 114.22 g of dried aluminum powder, 4.54 g of dried alumina powder, 98.62 g of dried cerium oxide and 881.232 g of dried zirconia powder were mixed and ball-milled with a planetary ball mill. The mass ratio of balls to materials was 3:1, the ball milling time was 4h. After ball milling, the materials were sieved by a 40 - 200 mesh sieve to obtain the mixture.
3. the mixture was loaded into a high-pressure reactor, O₂ was introduced with the oxygen pressure being set at 12 MPa. The nozzle was arranged at the lower end of the high-pressure reactor. The nozzle size of the nozzle was Φ6mm. The high-pressure reactor was installed at an upper side of the circulating water-cooling device. The mixture was ignited by the resistance wire and carried out the high-temperature combustion synthesis reaction. After formation of the high-temperature melt, the temperature was maintained for 10s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase is water.

The amorphous and solid solution micron-scale powders were densified by hot pressing sintering, and the prepared material was subjected to a three-point bending test, with the performances: fracture toughness is 13.25 MPa·m^{1/2} and bending strength is 995 MPa.

Example 4: A method for preparing alumina-based Al₂O₃/ZrO₂ (Y₂O₃) composite solid solution ceramic powder by an aluminum-oxygen combustion synthesis and spraying-in-water process was specifically carried out by the following steps:
1. Drying: the aluminum powder, alumina powder, zirconia powder and yttrium oxide powder were dried. The aluminum powder was vacuum dried at a vacuum of 0.06MPa and at a drying temperature of 80°C for 10h; the alumina powder, the zirconia powder, and the yttrium oxide powder were directly dried at a drying temperature of 80°C for 10h.
2. Mixing: 154.76 g of dried aluminum powder, 367.14 g of dried alumina powder, 478.10 g of dried zirconia powder and 175.79 g of dried yttrium oxide were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture was loaded into a high-pressure reactor, O₂ was introduced with the oxygen pressure being set at 15 MPa. The nozzle was arranged at the lower end of the high-pressure reactor. The nozzle size of the nozzle was Φ6mm. The high-pressure reactor was installed on a circulating water-cooling device. The mixture was ignited by the resistance wire and carried out the high-temperature combustion synthesis reaction. After the formation of the high-temperature melt, the temperature was maintained for 20s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

Example 5: A method for preparing alumina-based Al₂O₃/ZrO₂(Y₂O₃) composite solid solution ceramic powder by an aluminum-oxygen combustion synthesis and spraying-in-water process was specifically carried out by the following steps:
1. Drying: the aluminum powder, alumina powder, zirconia powder and yttrium oxide powder were dried. The aluminum powder was vacuum dried at a vacuum of 0.06MPa and at a drying temperature of 80°C for 10h; the alumina powder, the zirconia powder, and the yttrium oxide powder were directly dried at a drying temperature of 80°C for 10h.
2. Mixing: 142.89 g of dried aluminum powder, 518.54 g of dried alumina powder, 338.56 g of dried zirconia powder and 18.66 g of dried yttrium oxide were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture was loaded into a high-pressure reactor, O₂ and air were introduced, with the oxygen pressure being set at 15 MPa and air pressure being set at 3 MPa. The nozzle was arranged at the lower end of the high-pressure reactor. The nozzle size of the nozzle was Φ4mm. The high-pressure reactor was installed on a circulating water-cooling device. The mixture was ignited by the resistance wire and carried out the high-temperature combustion synthesis reaction. After the formation of the high-temperature melt, the temperature was maintained for 25s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

The solid solution micron-scale powder was densified by hot pressing sintering, and the prepared material was subjected to a three-point bending test, with performances: fracture toughness is 9.15 MPa·m^{1/2} and bending strength is 910 MPa.

Example 6: A method for preparing alumina-based Al₂O₃/ZrO₂(Y₂O₃) composite solid solution ceramic powder by an aluminum-oxygen combustion synthesis and spraying-in-water process was specifically carried out by the following steps:
1. Drying: the aluminum powder, alumina powder, zirconia powder and yttrium oxide powder were dried. The aluminum powder was vacuum dried at a vacuum of 0.06MPa at a drying temperature of 80°C for 10h; the alumina powder, the zirconia powder, and the yttrium oxide powder were directly dried at a drying temperature of 80°C for 10h.
2. Mixing: 179.48 g of dried aluminum powder, 588.25 g of dried alumina powder, 232.26 g of dried zirconia powder and 34.14 g of dried yttrium oxide were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture was loaded into a high-pressure reactor, O₂ with a pressure of 18 MPa and N₂ with a pressure 2 MPa were introduced. The nozzle was arranged at the lower end of the high-pressure reactor. The nozzle size of the nozzle was Φ3mm. The high-pressure reactor was installed on a circulating water-cooling device. The mixture was ignited by the resistance wire and carried out the high-temperature combustion synthesis reaction. After the formation of the high-temperature melt, the temperature was maintained for 20s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase is water.

Example 7: Referring to FIG. 1, a method for preparing alumina-based Al₂O₃/ZrO₂(CeO₂) composite solid solution ceramic powder by an aluminum-oxygen combustion synthesis and spraying-in-water process was specifically carried out by the following steps:
1. Drying: the aluminum powder, alumina powder, zirconia powder and cerium oxide powder were dried. The aluminum powder was vacuum dried at a vacuum of 0.06MPa and at a drying temperature of 80°C for 10h; the alumina powder, the zirconia powder and the cerium oxide powder were directly dried at a drying temperature of 80°C for 10h.
2. Mixing: 178.62 g of dried aluminum powder, 334.37 g of dried alumina powder, 487.01 g of dried zirconia powder and 204.42 g of dried cerium oxide were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture was loaded into a high-pressure reactor, and O₂ was introduced with the oxygen pressure being set at 18 MPa. The nozzle was arranged at the lower end of the high-pressure reactor. The nozzle size of the nozzle was Φ3mm. The high-pressure reactor was installed on a circulating water-cooling device. The mixture was ignited by the resistance wire and carried out the high-temperature combustion synthesis reaction. After the formation of the high-temperature melt, the temperature was maintained for 50s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

Example 8: A method for preparing alumina-based Al₂O₃/ZrO₂ composite solid solution ceramic powder by an aluminum-oxygen combustion synthesis and spraying-in-water process was specifically carried out by the following steps:
1. Drying: the aluminum powder, alumina powder and zirconia powder were dried. The aluminum powder was vacuum dried at a vacuum of 0.06MPa and at a drying temperature of 80°C for 10h; the alumina powder and zirconia powder were directly dried at a drying temperature of 80°C for 10h.
2. Mixing: 1689.7 g of dried aluminum powder, 3476.2 g of dried alumina powder and 4834.1 g of dried zirconia powder were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture was loaded into a high-pressure reactor, an O₂-containing mixed gas, which was a mixture of oxygen and nitrogen, was introduced, with the oxygen pressure being set at 16 MPa and the nitrogen pressure being set at 2 MPa. The nozzle was arranged at the lower end of the high-pressure reactor. The nozzle size of the nozzle was Φ4mm. The high-pressure reactor was installed on a circulating water-cooling device. The mixture was ignited by the resistance wire and carried out the high-temperature combustion synthesis reaction. After the formation of the high-temperature melt, the temperature was maintained for 55s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

Example 9: A method for preparing alumina-based Al₂O₃/ZrO₂ composite solid solution ceramic powder by an aluminum-oxygen combustion synthesis and spraying-in-water process was specifically carried out by the following steps:
1. Drying: the aluminum powder, alumina powder and zirconia powder were dried. The aluminum powder was vacuum dried at a vacuum of 0.06MPa and at a drying temperature of 80°C for 10h; the alumina powder and zirconia powder were directly dried at a drying temperature of 80°C for 10h.
2. Mixing: 1317.3 g of dried aluminum powder, 3984.9 g of dried alumina powder and 4697.8 g of dried zirconia powder were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture material was loaded into a high-pressure reactor and preheated to 300°C, O₂ was then introduced to the pressure reaction tank with the oxygen pressure being set at 15 MPa. The nozzle was arranged at the lower end of the high-pressure reactor. The nozzle size of the nozzle was Φ8mm. The high-pressure reactor was installed on a circulating water-cooling device. The mixture was ignited by the resistance wire and carried out the high-temperature combustion synthesis reaction. After the formation of the high-temperature melt, the temperature was maintained for 30s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

Example 10: A method for preparing alumina-based Al₂O₃/MgO composite solid solution ceramic powder by an aluminum-oxygen combustion synthesis and spraying-in-water process was specifically carried out by the following steps:
1. Drying: the aluminum powder, alumina powder and magnesium oxide powder were dried. The aluminum powder was vacuum dried at a vacuum of 0.06MPa and at a drying temperature of 80°C for 10h; the alumina powder and magnesium oxide powder were directly dried at a drying temperature of 80°C for 10h.
2. Mixing: 145.20 g of dried aluminum powder, 425.23 g of dried alumina powder and 429.56 g of dried magnesium oxide powder were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture was loaded into a high-pressure reactor, and O₂ was introduced with the oxygen pressure being set at 15 MPa. The nozzle was arranged at the lower end of the high-pressure reactor. The nozzle size of the nozzle was Φ4mm. The high-pressure reactor was installed on a circulating water-cooling device. The mixture was ignited by the resistance wire and carried out the high-temperature combustion synthesis reaction. After the formation of the high-temperature melt, the temperature was maintained for 35s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

Example 11: A method for preparing alumina-based composite solid solution ceramic powder by an aluminum-oxygen combustion synthesis and spraying-in-water process was specifically carried out by the following steps:
1. Drying: the aluminum powder, alumina powder and titanium oxide powder were dried. The aluminum powder was vacuum dried at a vacuum of 0.06MPa and at a drying temperature of 80°C for 10h; the alumina powder and titanium oxide powder were directly dried at a drying temperature of 80°C for 10h.
2. Mixing: 154.76 g of dried aluminum powder, 428.43 g of dried alumina powder and 416.81 g of dried titanium oxide powder were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture was loaded into a high-pressure reactor, and O₂ was introduced with the oxygen pressure being set at 10 MPa. The nozzle was arranged at the lower end of the high-pressure reactor. The nozzle size of the nozzle was Φ5mm. The high-pressure reactor was installed on a circulating water-cooling device. The mixture was ignited by the resistance wire and carried out the high-temperature combustion synthesis reaction. After the formation of the high-temperature melt, the temperature was maintained for 35s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

Example 12: A method for preparing alumina-based composite solid solution ceramic powder by an aluminum-oxygen combustion synthesis and spraying-in-water process was specifically carried out by the following steps:
1. Drying: the aluminum powder and alumina powder were dried. The aluminum powder was vacuum dried at a vacuum of 0.06MPa and at a drying temperature of 80°C for 12h; the alumina powder was directly dried at a drying temperature of 80°C for 12h.
2. Mixing: 136.18 g of dried aluminum powder and 863.82 g of dried alumina powder were mixed and ball-milled with a planetary ball mill. The mass ratio of balls to materials was 3:1, and the ball milling time was 4h. After ball milling, the materials were sieved by a 40 - 200 mesh sieve to obtain the mixture.
3. the mixture was loaded into a high-pressure reactor, and a mixed gas of O₂ at an oxygen pressure of 12 MPa and air at an air pressure of 2 MPa. The nozzle was arranged at the lower end of the high-pressure reactor. The nozzle size of the nozzle was Φ5mm. The high-pressure reactor was installed on a circulating water-cooling device. The mixture was ignited by the resistance wire and carried out the high-temperature combustion synthesis reaction. After the formation of the high-temperature melt, the temperature was maintained for 20s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

Example 13: A method for preparing alumina-based composite solid solution ceramic powder by an aluminum-oxygen combustion synthesis and spraying-in-water process was specifically carried out by the following steps:
1. Drying: the aluminum powder, alumina powder and zirconia powder were dried. The aluminum powder was vacuum dried at a vacuum of 0.06MPa and at a drying temperature of 80°C for 10h; the alumina powder and zirconia powder were directly dried at a drying temperature of 80°C for 10h.
2. Mixing: 147.4 g of dried aluminum powder, 173.48 g of dried alumina powder and 679.11 g of dried zirconia powder were mixed and ball-milled with a planetary ball mill. The mass ratio of balls to materials was 3:1, and the ball milling time was 4h. After ball milling, the materials were sieved by a 40 - 200 mesh sieve to obtain the mixture material.
3. the mixture material was loaded into a high-pressure reactor, and O₂ was introduced with the oxygen pressure being set at 15 MPa. The nozzle was arranged at the lower end of the high-pressure reactor. The nozzle size of the nozzle was Φ4mm. The high-pressure reactor was installed on a circulating water-cooling device. The mixture was ignited by the resistance wire and carried out the high-temperature combustion synthesis reaction. After the formation of the high-temperature melt, the temperature was maintained for 20s. Then the nozzle was turned on, and the high-temperature melt was sprayed out through the nozzle under high temperature and high pressure and sprayed into the water-cooling device for rapid cooling by liquid phase to obtain alumina-based solid solution ceramic powder. The cooling liquid for rapid cooling by liquid phase was water.

## Claims

1. A method for preparing alumina-based solid solution ceramic powder by an aluminum-oxygen combustion synthesis and spraying-in-water process, **characterized in that**, the method comprises the following steps:
drying raw materials and then mixing uniformly to obtain a mixture;
loading the mixture into a high-pressure reactor, igniting in an oxygen-containing atmosphere, carrying out a high-temperature combustion synthesis reaction to form a high-temperature melt, and then maintaining the temperature for Is - 60s;
then turning on a nozzle, spraying out the high-temperature melt through the nozzle and rapid cooling by a liquid phase so that the alumina-based solid solution ceramic powder is obtained;
the raw materials are aluminum powder and diluent, and the mass fraction of the aluminum powder in the mixture is 10% - 40%, and the mass fraction of the diluent is 60% - 90%.

2. The method for preparing alumina-based solid solution ceramic powder by an aluminum-oxygen combustion synthesis and spraying-in-water process according to claim 1, **characterized in that**: the diluent is one or more selected from the group consisting of: aluminum oxide, zirconium oxide, magnesium oxide, calcium oxide, strontium oxide, scandium oxide, iron oxide, molybdenum oxide, barium oxide, vanadium oxide, titanium oxide, chromium oxide, cobalt oxide, nickel oxide, yttrium oxide, niobium oxide, hafnium oxide, tantalum oxide, lanthanum oxide, cerium oxide, praseodymium oxide, neodymium oxide, samarium oxide, europium oxide, gadolinium oxide, terbium oxide, dysprosium oxide, holmium oxide, erbium oxide, thulium oxide, ytterbium oxide, silicon oxide and lutetium oxide.

3. The method for preparing alumina-based solid solution ceramic powder by an aluminum-oxygen combustion synthesis and spraying-in-water process according to claim 2, **characterized in that**: when the product of aluminum-oxygen combustion synthesis contains zirconium oxide, a molar ratio of yttrium oxide to zirconium oxide is (0 - 20): 100; the molar ratio of cerium oxide to zirconium oxide is (0 - 30): 100; the molar ratio of magnesium oxide to zirconium oxide is (0 - 28): 100; the molar ratio of calcium oxide to zirconium oxide is (0 - 33.45): 100; the molar ratio of titanium oxide to zirconium oxide is (0 - 44.41): 100; the molar ratio of scandium oxide to zirconium oxide is (0 - 20): 100.

4. The method for preparing alumina-based solid solution ceramic powder by an aluminum-oxygen combustion synthesis and spraying-in-water process according to claim 3, **characterized in that**: the oxygen-containing atmosphere is oxygen, a mixture of oxygen and air, or a mixture of oxygen and nitrogen;
when the oxygen-containing atmosphere is oxygen, the pressure of oxygen is 5MPa - 50MPa;
when the oxygen-containing atmosphere is atmosphere mixture of oxygen and air, the pressure of oxygen in the oxygen-containing atmosphere is 5MPa - 50MPa, and the pressure of air is 0MPa - 20MPa;
when the oxygen-containing atmosphere is a mixture of oxygen and nitrogen, the pressure of oxygen in the oxygen-containing atmosphere is 5MPa - 50MPa, and the pressure of nitrogen is 0MPa - 20MPa.

5. The method for preparing alumina-based solid solution ceramic powder by an aluminum-oxygen combustion synthesis and spraying-in-water process according to claim 4, **characterized in that**: loading the mixture into the high-pressure reactor, in which the mixture is preheated to 25 - 300°C before igniting in the oxygen-containing atmosphere for carrying out the high-temperature combustion synthesis reaction.
